(19) Europäisches Patentamt
European Patent Office
Office européen des brevets

(11) **EP 4 783 246 A1**

(12) # EUROPEAN PATENT APPLICATION

published in accordance with Art. 153(4) EPC

(43) Date of publication:
**29.07.2026 Bulletin 2026/31**

(21) Application number: **24868328.6**

(22) Date of filing: **19.09.2024**

(51) International Patent Classification (IPC):
***H01M 4/13*** *(2010.01)* ***H01M 4/38*** *(2006.01)*
***H01M 4/48*** *(2010.01)* ***H01M 4/62*** *(2006.01)*
***H01M 4/587*** *(2010.01)* ***H01M 10/052*** *(2010.01)*
***H01M 50/449*** *(2021.01)* ***H01M 50/489*** *(2021.01)*

(52) Cooperative Patent Classification (CPC):
**H01M 4/13; H01M 4/38; H01M 4/48; H01M 4/587; H01M 4/62; H01M 10/052; H01M 50/449; H01M 50/489;** Y02E 60/10

(86) International application number:
**PCT/JP2024/033540**

(87) International publication number:
**WO 2025/063251 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.09.2023 JP 2023153675**

(71) Applicant: **Panasonic Intellectual Property Management Co., Ltd.**
**Kadoma-shi, Osaka 571-0057 (JP)**

(72) Inventors:
- **NAKAYAMA, Takahito**
  **Osaka 571-0057 (JP)**
- **SATO, Maho**
  **Osaka 571-0057 (JP)**
- **NISHINO, Hajime**
  **Osaka 571-0057 (JP)**

(74) Representative: **Eisenführ Speiser Patentanwälte Rechtsanwälte PartGmbB**
**Postfach 10 60 78**
**28060 Bremen (DE)**

(54) ## NON-AQUEOUS ELECTROLYTE SECONDARY BATTERY AND NEGATIVE ELECTRODE USED IN SAME

(57) A nonaqueous electrolyte secondary battery includes a positive electrode, a negative electrode, a nonaqueous electrolyte, and a separator interposed between the positive electrode and the negative electrode. The negative electrode includes a negative electrode current collector, and a negative electrode active material layer supported on the negative electrode current collector. The negative electrode active material layer contains a negative electrode active material, a binder, a thickener, and an additive. The additive is a polymer material having a melting point or thermal decomposition temperature of 200 °C or higher and 500 °C or lower. In a cross section of the negative electrode active material layer, the polymer material is dispersed, forming a plurality of island-like regions. The variance value of a Voronoi diagram when the cross section of the negative electrode active material layer is subjected to a Voronoi tessellation for the island-like regions is $2 \times 10^7$ $\mu m^4$ or less.

*FIG. 1*

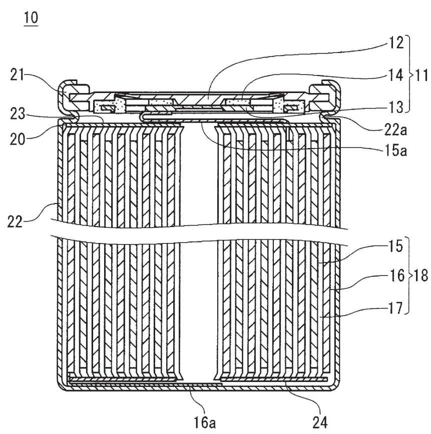


EP 4 783 246 A1

## Description

[Cross Reference to Related Application]

The present disclosure claims priority with respect to the Japanese Patent Application No. 2023-153675 filed on September 20, 2023, and the entire content of the patent application is incorporated herein by reference into the present specification.

[Technical Field]

The present disclosure relates to a nonaqueous electrolyte secondary battery, and a negative electrode used therefor.

[Background Art]

Patent Literature 1 proposes a "nonaqueous electrolyte battery, comprising: a positive electrode having a positive electrode mixture layer containing a positive electrode active material; a negative electrode having a negative electrode mixture layer containing a negative electrode active material; and a nonaqueous electrolyte, wherein a polymer formed by polymerization of monomer molecules having at least one unit structure selected from $-C_6H_4-SO_2-$, $-C_6H_4-S-$, and $-C_6H_4-O-$ is added to the positive electrode mixture layer and/or the negative electrode mixture layer".

Patent Literature 2 proposes a "negative electrode for a lithium secondary battery comprising: a lithium metal layer; and a multilayered protective layer formed on the lithium metal layer; wherein the protective layer includes: a first protective layer containing a carbon nanotube-ionically conductive polymer composite material; and a second protective layer containing a carbon nanotube-electrically conductive polymer composite material".

[Citation List]

[Patent Literature]

Patent Literature 1: Japanese Laid-Open Patent Publication No. 2003-007303
Patent Literature 2: Japanese Laid-Open Patent Publication No. 2019-506715

[Summary of Invention]

[Technical Problem]

The higher the energy density of the secondary battery is, the more safety is required. In particular, reducing the heat generation due to an internal short circuit is important. When an internal short circuit occurs in the battery, even though the shorted portion is very small, the separator will melt due to the Joule heat generated by the short circuit current, to form a larger shorted portion. As the shorted portion expands and the short circuit current increases, the battery temperature rises acceleratedly. The higher the energy density of the secondary battery is, the more the Joule heat generated by the short circuit current increases.

[Solution to Problem]

One aspect of the present disclosure relates to a nonaqueous electrolyte secondary battery, including: a positive electrode; a negative electrode; a nonaqueous electrolyte; and a separator interposed between the positive electrode and the negative electrode, wherein the negative electrode includes a negative electrode current collector, and a negative electrode active material layer supported on the negative electrode current collector, the negative electrode active material layer contains a negative electrode active material, a binder, a thickener, and an additive, the additive is a polymer material having a melting point or thermal decomposition temperature of 200 °C or higher and 500 °C or lower, in a cross section of the negative electrode active material layer, the polymer material is dispersed, forming a plurality of island-like regions, and a variance value of a Voronoi diagram when the cross section of the negative electrode active material layer is subjected to a Voronoi tessellation for the island-like regions is $2\times10^7$ $\mu m^4$ or less.

Another aspect of the present disclosure relates to a negative electrode for a secondary battery, including: a negative electrode current collector; and a negative electrode active material layer supported on the negative electrode

current collector, wherein the negative electrode active material layer contains a negative electrode active material, a binder, and an additive, the additive is a polymer material having a melting point or thermal decomposition temperature of 200 °C or higher and 500 °C or lower, in a cross section of the negative electrode active material layer, the polymer material is dispersed, forming a plurality of island-like regions, and a variance value of a Voronoi diagram when the cross section of the negative electrode active material layer is subjected to a Voronoi tessellation for the island-like regions is $2\times10^7$ $\mu m^4$ or less.

[Advantageous Effects of Invention]

According to the present disclosure, it is possible to achieve both high safety and favorable battery performance.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawing]

[FIG. 1] A schematic longitudinal sectional view of the internal structure of a secondary battery according to an embodiment of the present disclosure.

[Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, the phrase "a numerical value A to a numerical value B" means to include the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit.

Nonaqueous electrolyte secondary batteries include lithium-ion secondary batteries using at least a material that reversibly absorbs and releases lithium ions as a negative electrode material, solid-state batteries including a gel electrolyte or a solid electrolyte, and the like.

The nonaqueous electrolyte secondary battery according to the present disclosure includes a positive electrode, a negative electrode, and a nonaqueous electrolyte. Usually, a separator is disposed between the positive electrode and the negative electrode.

A. Negative electrode

The negative electrode includes a negative electrode current collector, and a negative electrode active material layer supported on the negative electrode current collector. The negative electrode active material layer is formed on a surface of the negative electrode current collector. The negative electrode active material layer is constituted of a negative electrode mixture, and therefore may be called a negative electrode mixture layer.

[Negative electrode current collector]

The negative electrode current collector is constituted of a sheet-like conductive material. As the negative electrode current collector, a non-porous conductive substrate (metal foil etc.), a porous conductive substrate (mesh, net, punched sheet, etc.) can be used.

[Negative electrode active material layer]

The negative electrode active material layer is supported on one or both surfaces of the negative electrode current collector. The negative electrode active material layer contains a negative electrode active material, a binder, a thickener, and an additive, and may further contain a conductive agent. The additive is a polymer material having a melting point or thermal decomposition temperature of 200 °C or higher and 500 °C or lower (hereinafter, the "melting point or thermal decomposition temperature" may be collectively referred to as a "diffusion temperature").

In a cross section of the negative electrode active material layer, the polymer material is dispersed, forming a

plurality of island-like regions. The island-like regions are spot-like regions at which the polymer material is present, and can also be taken as particulate regions when viewed macroscopically. The island-like regions may be regions constituted only of the polymer material (P), or may be agglomerated regions each constituted of the polymer material (P) and a material other than the polymer material (P) (a negative electrode active material, a conductive agent, etc.) agglomerated together. The shape of the island-like regions is not particularly limited, and may be irregular. The polymer material may be an electrically insulative material, and may be a mixture of an electrically insulative material and a conductive material. Such a polymer material is hereinafter may be referred to as the "polymer material (P)".

The polymer material (P) has an action of, while suppressing the increase in negative electrode resistance at room temperature, increasing the negative electrode resistance at high temperatures when an internal short circuit occurs in the battery. This allows for achieving both high safety and favorable battery performance.

Specifically, the polymer material (P) has a function of blocking a part of the conductive pathway, in the event when an internal short circuit occurs, the short circuit current increases, and the battery temperature rises. At room temperature, the polymer material (P) maintains its island shape, and hardly increases the negative electrode resistance. On the other hand, when an internal short circuit occurs, the polymer material (P) will melt before the battery temperature rises excessively. The molten polymer material (P) diffuses within the negative electrode active material layer. The polymer material (P) diffused within the negative electrode active material layer enters between the particles of the negative electrode active material, between the particles of the negative electrode active material and the conductive agent, and between the particles of the conductive agent, to partially block the conductive pathway.

Furthermore, when the polymer material (P) decomposes, the distance between the particles of the negative electrode active material increases, to increase the negative electrode resistance. As a result, the short-circuit current is suppressed.

(Average area)

The average area of the island-like regions may be 200 $\mu m^2$ or less. When the average area of the island-like regions is 200 $\mu m^2$ or less, the polymer material (P) is highly dispersible, and can diffuse sufficiently over a wide region within the negative electrode active material layer at high temperatures, which can significantly increase the resistance. The average area of the island-like regions may be 120 $\mu m^2$ or less, may be 60 $\mu m^2$ or less, may be 50 $\mu m^2$ or less, and may be 30 $\mu m^2$ or less. The lower limit of the average area of the island-like regions is not particularly limited, and may be, for example, 10 $\mu m^2$ or more.

Here, the average area of the island-like regions is an area obtained by dividing the total area St of the island-like regions included in an observation region in a cross section of the negative electrode active material layer by the number N of the island-like regions included in the observation region. The size of the observation region is set such that at least 30 or more island-like regions can be observed. The height of the observation region, for example, may be the same as the thickness (T) of the negative electrode active material layer, and may be 80% or more of the thickness. The length (W) of the observation region in the plane direction of the negative electrode active material layer may be 200 $\mu m$ to 500 $\mu m$. In this case, the size of the observation region is $T \times W$ ($\mu m^2$).

(Average perimeter)

Next, the average perimeter of the island-like regions is desirably 60 $\mu m$ or less. When the average perimeter of the island-like regions is 60 $\mu m$ or less, the size of a plurality of the island-like regions is considered sufficiently small. When the average perimeter is sufficiently small, the dispersibility of the polymer material (P) is sufficiently high, and the polymer material (P) can diffuse over a wide region within the negative electrode active material layer at high temperatures caused by the occurrence of an internal short circuit. This can significantly increase the negative electrode resistance. The average perimeter of the island-like regions may be 60 $\mu m$ or less, may be 40 $\mu m$ or less, may be 30 $\mu m$ or less, and may be 20 $\mu m$ or less. The lower limit of the average perimeter of the island-like regions is not particularly limited, and may be, for example, 1 $\mu m$ or more.

Here, the average perimeter of the island-like regions is a length obtained by dividing the total length of the perimeters of a plurality of the island-like regions included in an observation area of a cross section of the negative electrode active material layer by the number N of the island-like regions included in the observation area. Note that the size of the observation region is set similar to that when determining the average area of the island-like regions.

(Variance value of Voronoi diagram)

Next, the variance value of a Voronoi diagram (hereinafter may be referred to as the "Voronoi variance") obtained by subjecting the observation region to a Voronoi tessellation for the island-like regions is $2 \times 10^7$ $\mu m^4$ or less. The smaller the Voronoi variance is, the better the dispersibility is. When the Voronoi variance is $2 \times 10^7$ $\mu m^4$ or less, the polymer

material (P) can diffuse over a wide area within the negative electrode active material layer at high temperatures caused by the occurrence of an internal short circuit. This can significantly increase the negative electrode resistance. The Voronoi variance may be $2\times10^6$ $\mu m^4$ or less, may be $2\times10^5$ $\mu m^4$ or less, may be $1\times10^5$ $\mu m^4$ or less, and may be $5\times10^4$ $\mu m^4$ or less. The lower limit of the Voronoi variance is not particularly limited, and may be, for example, $1\times10^4$ $\mu m^4$ or more.

The size of the observation region to be subjected to the Voronoi tessellation is set similar to that when calculating the average area of the island-like regions. Specifically, the Voronoi tessellation is performed, with the centers (centroids) of all the island-like regions included in the observation region taken as the base points, and the histogram of the tessellated regions is computed, to calculate a Voronoi variance. The Voronoi variance is determined as an average value of three or more Voronoi variances calculated in at least three observation regions.

(Agglomerated particle area)

Next, the average area of the top three largest island-like regions among the island-like regions in the negative electrode active material layer (hereinafter may be referred to as the "agglomerated particle area") is preferably 900 $\mu m^2$ or less. When the agglomerated particle area of the island-like regions is 900 $\mu m^2$ or less, the dispersibility of the polymer material (P) can be considered sufficiently high. Therefore, the polymer material (P) can diffuse over a wide region within the negative electrode active material layer at high temperatures caused by the occurrence of an internal short circuit, which can significantly increase the resistance. The agglomerated particle area of the island-like regions may be 800 $\mu m^2$ or less, may be 700 $\mu m^2$ or less, and may be 400 $\mu m^2$ or less. The lower limit of the agglomerated particle area of the island-like regions is not particularly limited, and may be, for example, 100 $\mu m^2$ or more. Each of the top three largest island-like regions is considered to be an agglomerated region of the polymer material (P), or an agglomerated region of the polymer material (P) with the negative electrode active material and the conductive agent. By sufficiently reducing the area of such agglomerated regions, the dispersibility of the polymer material (P) can be significantly enhanced.

Here, the agglomerated particle area of the island-like regions is defined as an area obtained by dividing the total area of an island-like region having the largest area, an island-like region having the second largest area, and an island-like region having the third largest area among the plurality of island-like regions included in an observation area in a cross section of the negative electrode active material layer, by three. The size of the observation area is set similar to that when determining the average area of the island-like regions. Note that the agglomerated particle area of the island-like regions is calculated as an average value of three or more agglomerated particle areas measured in at least three different observation areas (cross sections).

The average area, average perimeter, Voronoi diagram variance, agglomerated particle area, etc. of the island-like regions can be measured as follows.

(1) Preparation of cross section of negative electrode active material layer

First, a negative electrode as an object to be measured is prepared. Next, the negative electrode active material layer and the negative electrode current collector are cut together along the thickness direction of the negative electrode, to form a cross section. At this time, a thermosetting resin may be filled into the negative electrode active material layer and cured. For example, a cross-section polisher (CP) method, a focused ion beam (FIB) method, or the like can be used to obtain a cross-sectional sample of the negative electrode active material layer.

The negative electrode as an object to be measured is taken out from a secondary battery having a depth of discharge (DOD) of 90% or more. The depth of discharge (DOD) is a ratio of the quantity of electricity discharged, to the quantity of electricity that a fully charged battery has. The quantity of electricity when a completely discharged battery (DOD = 100%) is charged to be a fully charged state (SOC = 100%, DOD = 0%) (i.e., the full charge capacity) corresponds to the rated capacity. The voltage of a fully charged battery corresponds to the end-of-charge voltage. The voltage of a completely discharged battery corresponds to the end-of-discharge voltage.

(2) Photographing cross section of negative electron active material layer with scanning electron microscope (SEM)

Next, the cross-sectional sample of the negative electrode active material layer is observed with an SEM. The SEM observation is performed, for example, at a magnification of 100 times to 500 times. The SEM image is taken such that a region of 200 $\mu m$ or more (desirably 300 $\mu m$ or more) long in the plane direction of the negative electrode active material layer is observed.

(3) Elemental analysis

Using the SEM image of the cross-sectional sample, elemental analysis using EDX (energy dispersive X-ray spectroscopy) or EPMA (electron probe microanalyzer) is performed. By extracting a component (e.g., sulfur element)

derived from the polymer material (P) from the cross-sectional analysis data, a mapping image of the polymer material (P) can be obtained. By analyzing the mapping image using an image analysis software, the average area and average perimeter of the island-like regions, the variance value of the Voronoi diagram, the agglomerated particle area, and the like can be calculated. For example, the observation region is divided into 256×256 regions, and EDX analysis is performed on each region. At this time, by binarizing the image such that the component (e.g., sulfur element) derived from the polymer material (P) appears in black, and other areas appear in white, a mapping image can be obtained. In the case where a group of two or more black areas that are adjacent vertically, horizontally, or diagonally is set as an island-like region, the length of the outline surrounding the group is the perimeter of the island-like region. In the case where a single black area is set as an island-like region, the length of the outline surrounding that single black area is the perimeter of the island-like region, and the area enclosed by each outline is the area of the island-like region.

Next, a description will be given below of a method of determining a variance value of a Voronoi diagram.

First, a Voronoi tessellation processing is performed on the binarized image using an image analysis software. In the Voronoi tessellation processing, the center of each independent island-like region is extracted, and with respect to a plurality of the centers, the image is divided into a plurality of cells (hereinafter may be referred to as "Voronoi cells"), depending on which center the other points in the same distance space are closest to. Thereafter, the areas of the respective Voronoi cells are extracted, and the variance value of them are determined as the Voronoi variance. The variance value V can be calculated using the following formula, where the area of each Voronoi cell is denoted by Xi (i = 1, 2, ... n), and the average is denoted by Xave.

$$V = 1/n\Sigma(Xi-Xave)^2$$

(4) Analysis conditions

Preferred conditions for SEM-EPMA measurement for analyzing the cross-sectional sample of the negative electrode active material layer will be described below.

As the processing apparatus, IB-19520CCP (cross-section polisher) manufactured by JEOL Corporation is used. The processing conditions are such that the accelerating voltage is 6 kV, and the current value is 150 to 180 μA. The degree of vacuum is set to $5\times10^{-4}$ to $2\times10^{-3}$ Pa.

For the measurement instrument, JSM-7900F (field-emission scanning electron microscope) manufactured by JEOL Corporation, and XM-86030 (EPMA detector) manufactured by JEOL Corporation are used. The accelerating voltage during analysis is 8 kV, and the SEM accelerating voltage is set to 2 kV. The electron beam current is $5\times10^{-8}$ A, and the observation magnification is set to 300 times. The measurement time is 30 ms.

In the binarization process, binarization may be performed such that the areas where the X-ray detection count of the component (e.g., sulfur element) derived from the polymer material (P) detected under the above conditions is 50 cps or more and the signal-to-noise intensity ratio is 1.5 or more appear in black, and the other areas appear in white.

[Polymer material (P)]

In the following, a desirable polymer material (P) will be described by way of example.

The melting point or thermal decomposition temperature (diffusion temperature) of the polymer material (P) is 200 °C or higher and 500 °C or lower. Usually, the negative electrode active material layer contains, in addition to the polymer material (P), a polymer material that functions as a binder. Note that the binding properties of the binder is higher than that of the polymer material (P). Also, the binder may not necessarily form island-like regions. In other words, the negative electrode active material layer may contain a polymer material that forms island-like regions and a polymer material that does not form island-like regions. As the binder, a polymer that normally does not melt or thermally decompose at a diffusion temperature of 200 °C or higher and 500 °C or lower may be used. When the diffusion temperature of the polymer material (P) is lower than 200 °C, the polymer material (P) may melt or decompose during normal battery use or during the manufacturing process, resulting in deterioration of the battery performance. When the diffusion temperature of the polymer material (P) exceeds 500 °C, the diffusion speed of the polymer material (P) during temperature rise is slowed down, failing to obtain a sufficient resistance increase effect.

The polymer material (P) is desirably a linear polymer having no crosslinked structure. The linear polymer having no crosslinked structure has a high degree of freedom, and, at high temperatures, can easily diffuse within the negative electrode active material layer and easily decompose. Therefore, the polymer material (P) can easily enter between particles of the negative electrode active material, between the particles of the negative electrode active material and the conductive agent, and between the particles of the conductive agent, which can easily partially block the conductive pathway.

(Average particle diameter (D50))

The polymer material (P) is in a powder state before mixed into the negative electrode mixture. The average particle diameter (D50) of the polymer material (P) particles constituting the powder is desirably 50 μm or less. With the average particle diameter (D50) being 50 μm or less, the aforementioned average area, average perimeter, agglomerated particle area, Voronoi variance, and other parameters can be easily controlled within desired numerical ranges. The average particle diameter (D50) is more desirably 40 μm or less, even more desirably 30 μm or less. The lower limit of the average particle diameter (D50) is not particularly limited, and may be, for example, 1 μm or more.

Here, the average particle diameter (D50) of the polymer material (P) refers to a median diameter at which the cumulative volume reaches 50% in a volume-based particle size distribution of the polymer material (P). The volume-based particle size distribution of the polymer material (P) can be measured, for example, using a laser diffraction-scattering type particle size distribution analyzer. A sample of the polymer material (P) as an object to be measured may be prepared by removing it from the negative electrode active material layer. Alternatively, if the polymer material (P) in the form of a raw material before mixing into the negative electrode active material layer is available, the raw material of the polymer material (P) may be used.

(BET specific surface area)

The BET specific surface area of the polymer material (P) is desirably 10 $m^2/g$ or less. The BET specific surface area, although subjected to the influence of the particle diameter of the polymer material (P), is greatly influenced by the state of the particles themselves. For example, when the particle surfaces are considerably roughened, or the particles themselves are porous, the BET specific surface area will increase even though the average particle diameter (D50) is small. The BET specific surface area of 10 $m^2/g$ or less is considered to indicate that the polymer material (P) has a small roughness on its particle surface, or the particles themselves do not contain many voids. In this case, it is presumed that the expansion stress strongly acts on the polymer material (P) when heated, to enhance its diffusivity when heated. The BET specific surface area may be 5 $m^2/g$ or less, may be 2 $m^2/g$ or less, and may be 1.8 $m^2/g$ or less.

Here, the BET specific surface area of the polymer material (P) is measured by a gas adsorption method (BET single-point method). For the gas, nitrogen gas is used. The details of the BET method are in accordance with JIS R1626. A sample of the polymer material (P) as an object to be measured may be prepared by removing it from the negative electrode active material layer. Alternatively, if the polymer material (P) in the form of a raw material before mixing into the negative electrode active material layer is available, the raw material of the polymer material (P) may be used.

(Weight-average molecular weight (Mw))

The weight-average molecular weight (Mw) of the polymer material (P) desirably satisfies $Mw < 50,000$, more desirably $5,000 \leq Mw < 50,000$. When the weight-average molecular weight (Mw) satisfies $Mw < 50,000$ (even $5,000 \leq Mw < 50,000$), the melting speed of the polymer material (P) when heated is sped up, leading to improve dispersibility, and the thermal decomposition thereof can easily proceed, so that the effect of increasing the resistance of the negative electrode active material layer is enhanced. The Mw is more desirably 30,000 or less, even more desirably 20,000 or less, and may be 15,000 or less.

The weight-average molecular weight (Mw) of the polymer material (P) can be measured by, for example, ultra-high temperature gel permeation chromatography (GPC). Here, the Mw is a weight-average molecular weight based on polystyrene.

The measurement conditions for ultra-high temperature GPC are as follows. For the measurement instrument, an ultra-high temperature GPC SSC-7110 is used. For the column, one TSKguard column HHR(S)HT and two TSKgel GMHHR-H(S)HT (7.8 mm I.D. *30 cm) columns are used. For the detector, a differential refractometer (RI detector) is used. As a sample pretreatment, a sample of the polymer material (P) is weighted out, to which a predetermined amount of 1-chloronaphthalene (1-CN) is added as a solvent, followed by heating to dissolve at 250 °C for 1 hour. Thereafter, hot filtration is performed using a PTFE filter with a pore size of 0.5 μm. As the sample injection volume, 500 μL of a solution having a sample concentration of 2 mg/mL is injected. The flow rate is set at 1.0 mL/min. The measurement temperature is set to a column temperature of 210 °C, and the pre-oven temperature is set at 250 °C. Polystyrene is used as a molecular weight standard.

With respect to the acquired data (peaks), in which the low-molecular-weight side of the polymer material (P) may partially overlap the blank derived from the GPC eluent, the entire peaks including that part are analyzed, to calculate a weight-average molecular weight.

(Specific examples of polymer material (P))

A preferred example of the polymer material (P) will be described below.

Among the polymer materials (P), a polymer material (P) having a backbone including a phenylene group and a sulfide group (hereinafter may be referred to as a "polymer material (PS)") is highly chemically stable and hardly forms a bond with other materials. Therefore, within the negative electrode active material layer, it does not excessively coat the negative electrode active material particles, and is likely to form island-like regions. Furthermore, the polymer material (PS) undergoes a significant morphology change when melting at a temperature equal to or higher than its melting point, and can exhibit high diffusibility within the negative electrode active material layer. When using the polymer material (PS), in the elemental analysis such as SEM-EDX and SEM-EPMA, sulfur atoms can be used as a component derived from the polymer material (P).

The backbone of the polymer material (PS) includes, for example, a repeating structure represented by a formula:

[Chem. 1]

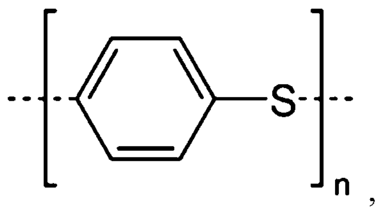

where n is any integer.

In a polymer, n is usually 20 or more, or 30 or more. Such a simple structure is highly chemically stable, and hardly causes side reactions within the negative electrode active material layer. Furthermore, the polymer material (PS) having a structure represented by the above formula is typically a linear polymer having no crosslinked structure. The degree of freedom thereof during melting is high, and the diffusibility thereof within the negative electrode active material layer after melted is also high. The polymer material (PS) having such a structure is highly electrically insulative, and the effect thereof of blocking the conductive pathway when it enters between the particles of the negative electrode active material, between the particles of the negative electrode active material and the conductive agent, and between the particles of the conductive agent is considered high.

A more specific example of the polymer material (PS) is polyphenylene sulfide (hereinafter may be referred to as "PPS").

The polymer material (P) may contain chloride ions in an amount of 10 ppm or more and 1000 ppm or less by mass, and even 10 ppm or more and 500 ppm or less by mass. The amount of the chloride ions contained in the polymer material (P) can be measured by, for example, peeling the negative electrode active material layer from the negative electrode, removing the polymer material (P) from the negative electrode active material layer, and analyzing it by ion chromatography using ion-exchanged water as a solvent.

The amount of the polymer material (P) to be contained in the negative electrode active material layer may be small. The content ratio of the polymer material in the negative electrode active material layer may be, for example, 0.01 mass% or more and 5 mass% or less, may be 0.1 mass% or more and 5 mass% or less, may be 0.3 mass% or more and 3 mass% or less, and may be 0.5 mass% or more and 2 mass% or less.

<Method for producing negative electrode>

Next, an example of a method of producing a negative electrode according to an embodiment of the present disclosure will be described.

The production method includes: a step (I) of preparing a negative electrode slurry containing a negative electrode active material, a binder, a polymer material (P), and a dispersion medium; a step (II) of preparing a negative electrode current collector; a step (III) of applying the negative electrode slurry onto a surface of the negative electrode current collector, to form an applied film; a step (IV) of drying the applied film, to form an unrolled layer; and a step (V) of rolling the unrolled layer, to form a negative electrode active material layer.

(I) Step of preparing slurry

A negative electrode slurry is prepared by mixing a negative electrode mixture containing a negative electrode

active material, a binder, and a polymer material (P), with a liquid dispersion medium, to allow the mixture to be dispersed in the dispersion medium. The negative electrode mixture may further contain another component (e.g., a conductive agent). As the liquid dispersion medium, water or an organic solvent, which has excellent affinity with the binder, can be used.

The average area, average perimeter, Voronoi variance, and agglomerated particle area of the island-like regions formed by the polymer material (P) can be controlled by the dispersion state of the polymer material (P) in the negative electrode slurry. The polymer material (P) has a tendency to exhibit a higher dispersibility when dry-mixed with the negative electrode active material in advance. The method for preparing the negative electrode slurry, however, is not particularly limited as long as a desired dispersion state of the polymer material (P) can be achieved. For example, the polymer material (P) may be wet-mixed in advance with a conductive agent, and then the negative electrode active material may be added to the mixture and further mixed together.

Examples of the dispersion medium include, but not limited to, water, an alcohol such as ethanol, an ether such as tetrahydrofuran, an amide such as dimethylformamide, N-methyl-2-pyrrolidone (NMP), and a mixed solvent thereof.

As the binder, it is desirable to use a resin material, such as styrene-butadiene rubber, but any binder that has high binding strength and is stable within the negative electrode active material layer may be used.

(II) Step of preparing negative electrode current collector

As the negative electrode current collector, a sheet-like conductive material (metal foil, mesh, net, punched sheet, etc.) is used. In particular, a metal foil is preferred. Examples of the material of the negative electrode current collector include stainless steel, nickel, nickel alloy, copper, and copper alloy. The thickness of the negative electrode current collector is not particularly limited, and is, for example, 1 to 50 μm, and may be 5 to 30 μm.

(III) Step of forming applied film of negative electrode slurry

An applied film is formed by applying the negative electrode slurry onto a surface of the negative electrode current collector. Examples of an apparatus used for applying the negative electrode slurry include a bar coater, a gravure coater, a blade coater, a roll coater, a comma coater, a die coater, and a lip coater.

(IV) Step of drying applied film

Next, the applied film is dried to volatilize the dispersion medium, to form an unrolled applied film. For example, when the applied film is dried at a temperature of 150 °C or higher, or even 180 °C or higher, the polymer material (P) is likely to be more distributed on the separator side than on the negative electrode current collector side in the negative electrode active material layer.

(V) Step of rolling unrolled layer

Next, the unrolled layer is rolled, to form a negative electrode active material layer. Although the rolling conditions are not particularly limited, the density of the negative electrode active material in the negative electrode active material layer is, for example, 1.0 g/$cm^3$ or more and 2.0 g g/$cm^3$ or less, and may be 1.5 g/$cm^3$ or more and 1.7 g/$cm^3$ or less.

B. Secondary battery

A nonaqueous secondary battery according to an embodiment of the present disclosure includes the above-described negative electrode, a positive electrode, a nonaqueous electrolyte, and a separator interposed between the negative electrode and the positive electrode. The nonaqueous secondary battery may be a liquid-type secondary battery including an electrolyte solution as the electrolyte, and an all-solid secondary battery including a solid electrolyte as the electrolyte. In the following, using a lithium-ion secondary battery as an example, the configuration of the secondary battery will be specifically described.

[Negative electrode]

As the negative electrode, a negative electrode having the above-described features is used. The negative electrode active material layer is constituted of a negative electrode mixture. The negative electrode mixture includes, as essential components, a negative electrode active material, a binder, and a polymer material (P), and may also include optional components. The optional components may include a conductive material, a thickener, and the like.

The negative electrode active material includes a material that electrochemically absorbs and releases lithium ions. The material that electrochemically absorbs and releases lithium ions is preferably at least one selected from the

group consisting of a carbon material and a silicon-containing material. Examples of the carbon material include graphite, graphitizable carbon (soft carbon), and non-graphitizable carbon (hard carbon). In particular, graphite is preferred in terms of its excellent stability during charging and discharging, and its low irreversible capacity. Examples of the silicon-containing material include elementary silicon, a composite material of silicon and $SiO_2$, a composite material of silicon and lithium silicate, and a composite material of silicon and carbon.

When a carbon material and a silicon-containing material are used in combination, the content ratio of the silicon-containing material relative to the total mass of the carbon material and the silicon-containing material is, for example, 1 mass% or more and 100 mass% or less, and may may be 3 mass% or more and 15 mass% or less.

The average particle diameter (D50) of the carbon material particles is, for example, 5 μm or more and 30 μm or less, and may be 10 μm or more and 20 μm or less. The average particle diameter (D50) of the silicon-containing material is, for example, 3 μm or more and 18 μm or less, and may be 6 μm or more and 15 μm or less. Here, the average particle diameter (D50) refers to a median diameter at which the cumulative volume reaches 50% in a volume-based particle size distribution.

The average particle diameter of the negative electrode active material may be measured from the above-described cross-sectional sample of the negative electrode active material layer. For example, a SEM image of the cross section is photographed so that 10 or more negative electrode active material particles are observed, and through image processing, the diameters of equivalent circles respectively having the same areas as the cross sections of 10 or more active material particles are measured, to calculate an average value of them as the average particle diameter.

Examples of the conductive agent include carbon nanotubes (CNTs), carbon fibers other than CNTs, and conductive particles (e.g., carbon black).

As the thickener, for example, a water-soluble polymer is used. Examples of the water-soluble polymer include: cellulose derivatives (e.g., cellulose ethers), such as carboxymethyl cellulose (CMC) and modified products thereof (including salts, such as Na salt), and methyl cellulose; saponified products of a polymer having a vinyl acetate unit, such as polyvinyl alcohol; and polyethers (e.g., polyalkylene oxide, such as polyethylene oxide).

The thickness of the negative electrode active material layer is not particularly limited, and may be, for example, 50 μm or more and 200 μm or less, and may be 75 μm or more and 150 μm or less. A single negative electrode active material layer may be formed from a plurality of layers having different forms from each other. For example, two or more layers containing negative electrode active materials differing in average particle diameter from each other may be stacked. Two or more layers containing negative electrode active materials differing in type or composition from each other may be stacked.

[Positive electrode]

The positive electrode includes a positive electrode current collector, and a positive electrode active material layer supported on one or both surfaces of the positive electrode current collector.

As the positive electrode current collector, a sheet-like conductive material (metal foil, mesh, net, punched sheet, etc.) is used. In particular, a metal foil is preferred. Examples of the material of the positive electrode current collector include stainless steel, aluminum, aluminum alloy, and titanium. The thickness of the positive electrode current collector is not particularly limited, and is, for example, 1 to 50 μm, and may be 5 to 30 μm.

The positive electrode active material layer is constituted of a positive electrode mixture, and may be called a positive electrode mixture layer. The positive electrode mixture layer is in the form of a film or membrane. The positive electrode mixture contains particles of a positive electrode active material as an essential component, and may optionally contain a binder, a conductive agent, and the like.

The positive electrode mixture layer can be formed by, for example, applying a positive electrode slurry of the positive electrode mixture dispersed in a dispersion medium, onto a surface of the positive electrode current collector, followed by drying. The applied film after drying may be rolled, as necessary.

The thickness of the positive electrode active material layer is not particularly limited, and may be, for example, 50 μm or more and 150 μm or less, and may be 75 μm or more and 125 μm or less. A single positive electrode active material layer may be formed from a plurality of layers having different forms from each other. For example, two or more layers containing positive electrode active materials differing in average particle diameter from each other may be stacked. Two or more layers containing positive electrode active materials differing in type or composition from each other may be stacked.

The density of the positive electrode active material in the positive electrode active material layer is, for example, 3.3 $g/cm^3$ or more and 4.0 $g/cm^3$ or less, and may be 3.5 $g/cm^3$ or more and 4.0 $g/cm^3$ or less.

The average particle diameter (D50) of the positive electrode active material particles is, for example, 1 μm or more and 50 μm or less, and may be 5 μm or more and 25 μm or less. Here, the average particle diameter (D50) refers to a median diameter at which the cumulative volume reaches 50% in a volume-based particle size distribution.

The positive electrode active material may contain a lithium-containing transition metal oxide. From the viewpoint

of achieving high capacity, the lithium-containing transition metal oxide preferably includes a lithium-nickel oxide (composite oxide N) containing lithium and Ni and having a layered rock-salt type crystal structure. The proportion of the composite oxide N in the positive electrode active material is, for example, 70 mass% or more, may be 90 mass% or more, and may be even 95 mass% or more. The ratio of Ni in the metal elements other than Li contained in the composite oxide N may be 50 atom% or more.

The composite oxide N is represented by, for example, a formula (1): $Li_{\alpha}Ni_{x1}M1_{x2}M2(_{1-xt-x2})O_{2+\beta}$. Here, the element M1 is at least one selected from the group consisting of V, Co, and Mn. The element M2 is at least one selected from the group consisting of Mg, Al, Ca, Ti, Cu, Zn, and Nb. The formula (1) satisfies $0.95 \leq \alpha \leq 1.05$, $-0.05 \leq \beta \leq 0.05$, $0.5 \leq x1 < 1$, $0 \leq x2 \leq 0.5$, and $0 < 1-x1-x2 \leq 0.5$. The value of $\alpha$ increases or decreases during charging and discharging.

The composite oxide N contains Ni, and in addition, may contain at least one selected from the group consisting of Co, Mn, and Al as the element M1 and the element M2. Co, Mn, and Al contribute to stabilizing the crystal structure of the composite oxide N.

From the viewpoint of achieving cost reduction and high capacity, the ratio of Co in the metal elements other than Li contained in the composite oxide N is desirably 0 atom% or more and 20 atom% or less, more desirably 0 atom% or more and 15 atom% or less.

The ratio of Mn in the metal elements other than Li may be 10 atom% or less, and may be 5 atom% or less. The ratio of Mn in the metal elements other than Li may be 1 atom% or more, may be 3 atom% or more, and may be 5 atom% or more.

The ratio of Al in the metal elements other than Li may be 10 atom% or less, and may be 5 atom% or less. The ratio of Al in the metal elements other than Li may be 1 atom% or more, may be 3 atom% or more, and may be 5 atom% or more.

As the binder optionally contained in the positive electrode active material layer, it is desirable to use a fluorocarbon resin, hydrogenated nitrile butadiene rubber, and the like, but any binder that has high binding strength and is stable within the positive electrode active material layer may be used. Examples of the fluorocarbon resin include polyvinylidene fluoride (PVDF), polytetrafluoroethylene (PTFE), perfluoroalkoxyalkane (PFA), tetrafluoroethylene-hexafluoropropylene copolymer (FEP), ethylene-tetrafluoroethylene copolymer (ETFE), and vinylidene fluoride-hexafluoropropylene copolymer. In particular, PVDF is preferred.

As the conductive agent optionally contained in the positive electrode active material layer, carbon nanotubes (CNTs), carbon fibers other than CNTs, conductive particles (e.g., carbon black, graphite), and the like can be used.

[Separator]

The separator is interposed between the positive electrode and the negative electrode. The separator is excellent in ion permeability and has moderate mechanical strength and electrically insulating properties. The separator may be a microporous thin film, a woven fabric, a nonwoven fabric, and the like. For the material of the separator, for example, polyolefin, such as polypropylene and polyethylene, is used.

The thickness of the separator may be, for example, 5 μm to 25 μm.

The separator may have a substrate layer, and a heat-resistant layer laminated on the substrate layer. For the substrate layer, a microporous thin film, a woven fabric, a nonwoven fabric, and the like can be used. The heat-resistant layer can be provided on at least one surface of the substrate layer. The heat-resistant layer is desirably provided at least on the side facing the positive electrode of the separator.

Here, the melting point or thermal decomposition temperature (diffusion temperature) of the polymer material (P) is desirably equal to or higher than the melting point of the substrate layer. For the material of the substrate layer, usually, a thermoplastic resin having a melting point is used. In particular, a polyolefin, such as polypropylene and polyethylene, is preferably used. The substrate layer constituted of a thermoplastic resin is typically provided with a shutdown function that acts to close the voids in the substrate layer upon reaching a high temperature exceeding a predetermined temperature. In other words, until the shutdown function is activated, current is permitted to flow through the battery, and the battery is required to have sufficient performance as a power source. If the diffusion temperature of the polymer material (P) is lower than the melting point of the substrate layer, the increase in resistance of the negative electrode active material layer by the polymer material (P) may proceed disadvantageously, failing to ensure sufficient performance as a power source.

The heat-resistant layer may contain an inorganic oxide filler as a major component (e.g., 80 mass% or more of the heat-resistant layer), and may contain a heat-resistant resin as a major component (e.g., 40 mass% or more of the heat-resistant layer). Examples of the heat-resistant resin include polyamide resins, such as aromatic polyamide (aramid), polyimide resins, and polyamide-imide resins.

The thickness of the substrate layer may be, for example, 0% to 100% of the thickness of the separator, and may be, for example, 5 μm to 20 μm. When the thickness of the substrate layer is 0% (without the substrate layer), a separator constituted only of the heat-resistant layer may be used.

The thickness of the heat-resistant layer may be, for example, 0% to 100% of the separator thickness, and may be, for example, 0 μm to 15 μm.

[Nonaqueous electrolyte]

The nonaqueous electrolyte of a lithium-ion secondary battery has lithium ion conductivity. The nonaqueous electrolyte may be a liquid electrolyte (electrolyte solution), and may be a solid electrolyte.

As the solid electrolyte, for example, a solid or gel polymer electrolyte, an inorganic solid electrolyte, and the like can be used. As the inorganic solid electrolyte, for example, a known material for use in all-solid lithium-ion secondary batteries and the like (e.g., oxide-based solid electrolyte, sulfide-based solid electrolyte, halide-based solid electrolyte) is used. The polymer electrolyte may contain, for example, a lithium salt and a matrix polymer, or a nonaqueous solvent, a lithium salt, and a matrix polymer. As the matrix polymer, for example, a polymer material that absorbs a nonaqueous solvent and turns into a gel is used. Examples of the polymer material include fluorocarbon resins, acrylic resins, and polyether resins.

The electrolyte solution contains a nonaqueous solvent and an electrolyte salt. In the case of a lithium-ion secondary battery, the electrolyte salt contains at least a lithium salt. The concentration of the lithium salt in the electrolyte solution is, for example, 0.5 mol/L or more and 2 mol/L or less. The nonaqueous electrolyte solution may contain a known additive.

As the nonaqueous solvent, for example, a cyclic carbonic acid ester, a chain carbonic acid ester, a cyclic carboxylic acid ester, and the like are used. Examples of the cyclic carbonic acid ester include propylene carbonate (PC), and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include $\gamma$-butyrolactone (GBL), and $\gamma$-valerolactone (GVL). The nonaqueous solvent may be used singly, or in combination of two or more kinds.

Examples of the lithium salt include a lithium salt of a chlorine-containing acid ($LiClO_4$, $LiAlCl_4$, $LiB_{10}Cl_{10}$, etc.), a lithium salt of a fluorine-containing acid ($LiPF_6$, $LiBF_4$, $LiSbF_6$, $LiAsF_6$, $LiCF_3SO_3$, $LiCF_3CO_2$, etc.), a lithium salt of a fluorine-containing acid imide ($LiN(SO_2F)_2$, $LiN(CF_3SO_2)_2$, $LiN(CF_3SO_2)(C_4F_9SO_2)$, $LiN(C_2F_5SO_2)_2$, etc.), and a lithium halide (LiCl, LiBr, LiI, etc.). The lithium salt may be used singly, or in combination of two or more kinds.

The secondary battery, for example, has a structure in which an electrode group formed by winding the positive electrode and the negative electrode with the separator interposed therebetween is housed together with the electrolyte solution in an outer body. Without limited thereto, a different form of electrode group may be adopted. For example, a stacked-type electrode group formed by stacking the positive electrode and the negative electrode with the separator interposed therebetween may be adopted. The form of the battery is also not limited, and may be cylindrical, prismatic, coin, button, or laminate type.

In the following, a structure of a secondary battery will be described with reference to FIG. 1. FIG. 1 is a longitudinal sectional view of a cylindrical nonaqueous secondary battery 10 which is an example of the present embodiment. The present disclosure, however, is not limited to the following configuration.

The secondary battery 10 includes an electrode group 18, an electrolyte solution (not shown), and a bottomed cylindrical battery can 22 housing them. A sealing assembly 11 is clamped onto the opening of the battery can 22, with a gasket 21 interposed therebetween. This seals the inside of the battery. The sealing assembly 11 includes a valve body 12, a metal plate 13, and an annular insulating member 14 interposed between the valve body 12 and the metal plate 13. The valve body 12 and the metal plate 13 are connected to each other at their respective centers. A positive electrode lead 15a extended from the positive electrode plate 15 is connected to the metal plate 13. Therefore, the valve body 12 functions as a positive external terminal. A negative electrode lead 16a extended from the negative electrode plate 16 is connected to the bottom inner surface of the battery can 22. An annular groove 22a is formed near the open end of the battery can 22. A first insulating plate 23 is disposed between one end face of the electrode group 18 and the annular groove 22a. A second insulating plate 24 is disposed between the other end face of the electrode group 18 and the bottom of the battery can 22. The electrode group 18 is formed by winding the positive electrode plate 15 and the negative electrode plate 16, with the separator 17 interposed therebetween.

(Supplementary notes)

The above description discloses the following techniques.

(Technique 1)

A nonaqueous electrolyte secondary battery, comprising:

a positive electrode; a negative electrode; a nonaqueous electrolyte; and a separator interposed between the positive electrode and the negative electrode, wherein
the negative electrode includes a negative electrode current collector, and a negative electrode active material layer supported on the negative electrode current collector,

the negative electrode active material layer contains a negative electrode active material, a binder, a thickener, and an additive,
the additive is a polymer material having a melting point or thermal decomposition temperature of 200 °C or higher and 500 °C or lower,
in a cross section of the negative electrode active material layer, the polymer material is dispersed, forming a plurality of island-like regions, and
a variance value of a Voronoi diagram when the cross section of the negative electrode active material layer is subjected to a Voronoi tessellation for the island-like regions is $2\times10^7$ $\mu m^4$ or less.

(Technique 2)

The nonaqueous electrolyte secondary battery according to technique 1, wherein an average perimeter of the island-like regions is 60 $\mu m$ or less.

(Technique 3)

The nonaqueous electrolyte secondary battery according to technique 1 or 2, wherein an average area of the island-like regions is 200 $\mu m^2$ or less.

(Technique 4)

The nonaqueous electrolyte secondary battery according to any one of techniques 1 to 3, wherein an average area of the top three largest island-like regions is 900 $\mu m^2$ or less.

(Technique 5)

The nonaqueous electrolyte secondary battery according to any one of techniques 1 to 4, wherein an average particle diameter of the polymer material is 50 $\mu m$ or less.

(Technique 6)

The nonaqueous electrolyte secondary battery according to any one of techniques 1 to 5, wherein a BET specific surface area of the polymer material is 10 $m^2/g$ or less.

(Technique 7)

The nonaqueous electrolyte secondary battery according to any one of techniques 1 to 6, wherein a weight-average molecular weight (Mw) of the polymer material satisfies Mw < 50,000.

(Technique 8)

The nonaqueous electrolyte secondary battery according to any one of techniques 1 to 7, wherein the polymer material has a backbone including a phenylene group and a sulfide group.

(Technique 9)

The nonaqueous electrolyte secondary battery according to technique 8, wherein the backbone includes a repeating structure represented by a formula:

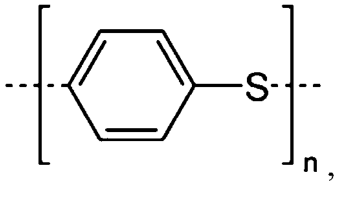

where n is any integer.

(Technique 10)

The nonaqueous electrolyte secondary battery according to technique 9, wherein the polymer material includes polyphenylene sulfide.

(Technique 11)

The nonaqueous electrolyte secondary battery according to any one of techniques 1 to 10, wherein the polymer material contains chloride ions in an amount of 10 ppm or more and 1000 ppm or less by mass.

(Technique 12)

The nonaqueous electrolyte secondary battery according to any one of techniques 1 to 11, wherein a content ratio of the polymer material in the negative electrode active material layer is 0.01 mass% or more and 5 mass% or less.

(Technique 13)

The nonaqueous electrolyte secondary battery according to any one of techniques 1 to 12, wherein the negative electrode active material includes at least one selected from the group consisting of a carbon material and a silicon-containing material.

(Technique 14)

The nonaqueous electrolyte secondary battery according to any one of techniques 1 to 13, wherein

the separator has a substrate layer, and a heat-resistant layer laminated on the substrate layer, and
the melting point or thermal decomposition temperature of the polymer material is equal to or higher than a melting point of the substrate layer.

(Technique 15)

A negative electrode for a secondary battery, comprising:

a negative electrode current collector; and a negative electrode active material layer supported on the negative electrode current collector, wherein
the negative electrode active material layer contains a negative electrode active material, a binder, and an additive,
the additive is a polymer material having a melting point or thermal decomposition temperature of 200 °C or higher and 500 °C or lower,
in a cross section of the negative electrode active material layer, the polymer material is dispersed, forming a plurality of island-like regions, and
a variance value of a Voronoi diagram when the cross section of the negative electrode active material layer is subjected to a Voronoi tessellation for the island-like regions is $2\times10^7$ $\mu m^4$ or less.

The present disclosure will be specifically described below with reference to samples of experimental examples. The present disclosure, however, is not limited to the following Examples.

<<Example A1>>

[Production of positive electrode]

A composite oxide N ($LiNi_{0.85}Co_{0.10}Al_{0.05}O_2$) having an average particle diameter of 13 μm was used as a positive electrode active material. A 15-μm-thick aluminum foil was prepared as a positive electrode current collector. A positive electrode slurry was prepared by adding NMP to a positive electrode mixture containing the positive electrode active material, acetylene black, and polyvinylidene fluoride (PVDF) in a mass ratio of 95:2.5:2.5, and stirring them together. The positive electrode slurry was applied onto a surface of the aluminum foil serving as the positive electrode current collector, and the applied film was dried, to form an unrolled layer on each of both surfaces of the aluminum foil. Next, the unrolled layers were rolled into positive electrode active material layers having a density of 3.6 g/$cm^3$. The overall thickness of the positive electrode after rolling was 160 μm.

[Production of negative electrode]

A negative electrode slurry was prepared by adding water to a negative electrode mixture containing graphite serving as a negative electrode active material, $SiO_x$ where x = 1.0 which was a composite material of silicon and $SiO_2$, sodium carboxymethylcellulose (CMC-Na), and styrene-butadiene rubber (SBR) in a mass ratio of 95:1:2:2, and further containing polyphenylene sulfide (PPS) (average particle diameter (D50) = 10 μm, weight-average molecular weight 28,000, BET specific surface area 1.1 $m^2/g$, melting point 280 °C, chloride ion content 50 ppm) in an amount of 0.65 mass%, and stirring them together. Next, the negative electrode slurry was applied onto a surface of a copper foil serving as a negative electrode current collector, and the applied film was dried, to form a negative electrode active material layer on each of both surfaces of the copper foil. The negative electrode active material density in the negative electrode active material layers was adjusted to 1.6 $g/cm^3$. The overall thickness of the negative electrode was 170 μm.
The Voronoi variance of the island-like regions determined by the above-described method was $1\times10^4$ $\mu m^4$.

[Preparation of nonaqueous electrolyte]

$LiPF_6$ was dissolved at a concentration of 1.0 mol/L in a mixed solvent containing ethylene carbonate (EC) and diethyl carbonate (DEC) in a volume ratio of 3:7, to prepare a nonaqueous electrolyte.

[Fabrication of secondary battery]

With a tab attached to each electrode, the positive electrode and the negative electrode were wound spirally, with a separator (thickness 14 μm) interposed therebetween such that the tab was positioned at the outermost layer, to form an electrode group. The separator has a substrate layer of a 10 μm-thick microporous thin film made of polyethylene, and a heat-resistant layer of 4 μm thick laminated on one side (the side facing the positive electrode) of the substrate layer. The melting point of the microporous thin film is 150 °C. The heat-resistant layer contains 20 mass% of an inorganic oxide filler (alumina), with the remainder constituted of an aromatic polyamide (aramid). The electrode group was inserted into an outer body made of an aluminum laminated film, and vacuum-dried at 105 °C for two hours. Then, the electrolyte solution was injected, and the opening of the outer body was sealed. A sample A1 of the secondary battery was thus obtained.

<<Comparative Example R>>

A sample R of the secondary battery was fabricated in the same manner as the sample A1, except that the polymer material (P) was not contained in the negative electrode mixture.

<<Examples A2 to A4, Comparative Example a1>>

Samples A2 to A4 of Examples and a sample a1 of Comparative Example were fabricated in the same manner as the sample A1, except that the Voronoi variance of the island-like regions was varied as shown in Table 1, by changing the content ratio of the polymer material (P) in the positive electrode mixture and the stirring conditions in preparing a positive electrode slurry.

[Evaluation]

The obtained samples were subjected to the following evaluation.

(a) In a 25 °C environment, the battery sample was constant-current charged at a constant current of 0.3It until the voltage reached 4.2 V, and then, constant-voltage charged at a constant voltage of 4.2 V until the current reached 0.05It.
(b) In a 25 °C environment, a round nail (diameter 2.7 mm) was brought into contact at its tip with the center of the battery sample charged in (a), and driven into the sample at a speed of 1 mm/sec. The driving of the round nail was stopped upon detection of a battery voltage drop (Δ50 mV) due to an internal short circuit. The surface temperature of the battery was measured one minute after the battery sample was short-circuited. The surface temperatures of the samples A1 to A4 and the samples R and al are shown in Table 1.

[Table 1]

| sample | additive | PPS content ratio (mass%) | Voronoi variance ($\mu m^4$) | surface temperature (°O) |
|---|---|---|---|---|
| R | - | 0 | - | 80 < |
| A1 | PPS | 0.65 | $1\times10^4$ | 68 |
| A2 | PPS | 1.3 | $9\times10^4$ | 67 |
| A3 | PPS | 0.65 | $1\times10^5$ | 67 |
| A4 | PPS | 0.65 | $2\times10^7$ | 69 |
| al | PPS | 0.65 | $5\times10^7$ | 80 < |

Table 1 shows that in the samples Al to A4, as compared to the samples R and al, the surface temperatures were significantly low, indicating that the safety in the event of internal short circuit of the battery was improved, with almost no impact on the battery capacity.

<<Examples B1 to B5>>

Samples B1 to B5 of the secondary battery were fabricated and evaluated in the same manner as the sample A1, except that the average area of the island-like regions was varied as shown in Table 2, by changing as appropriate the content ratio of the polymer material (P) in the positive electrode mixture and the stirring conditions in preparing a positive electrode slurry.

[Table 2]

| sample | additive | PPS content ratio (mass%) | Voronoi variance ($\mu m^4$) | average area ($\mu m^2$) | surface temperature (°O) |
|---|---|---|---|---|---|
| R | - | 0 | - | - | 80 < |
| B1 | PPS | 0.65 | 1.0E+04 | 20 | 68 |
| B2 | PPS | 0.65 | 1.0E+04 | 72 | 69 |
| B3 | PPS | 1.3 | 1.0E+04 | 180 | 71 |
| B4 | PPS | 0.65 | 1.0E+04 | 200 | 72 |
| B5 | PPS | 0.65 | 1.0E+04 | 250 | 78 |

Table 2 shows that the surface temperatures of the samples B1 to B5 were significantly low, as compared to that of the sample R, among which the surface temperatures of the samples B1 to B4 were particularly low. This indicates that the average area of the island-like regions is preferably 200 $\mu m^2$ or less.

<<Examples C1 to C5>>

Samples C1 to C5 of the secondary battery were fabricated and evaluated in the same manner as the sample A1, except that the average perimeter of the island-like regions was varied as shown in Table 3, by changing as appropriate the content ratio of the polymer material (P) in the positive electrode mixture and the stirring conditions in preparing a positive electrode slurry.

[Table 3]

| sample | additive | PPS content ratio (mass%) | Voronoi variance ($\mu m^4$) | average perimeter ($\mu m$) | surface temperature (°O) |
|---|---|---|---|---|---|
| R | - | 0 | - | - | 80 < |
| C1 | PPS | 0.65 | 1.0E+04 | 15 | 67 |
| C2 | PPS | 0.65 | 1.0E+04 | 35 | 67 |
| C3 | PPS | 1.3 | 1.0E+04 | 35 | 68 |

(continued)

| sample | additive | PPS content ratio (mass%) | Voronoi variance ($\mu m^4$) | average perimeter ($\mu m$) | surface temperature (°O) |
|---|---|---|---|---|---|
| C4 | PPS | 0.65 | 1.0E+04 | 60 | 67 |
| C5 | PPS | 0.65 | 1.0E+04 | 80 | 78 |

Table 3 shows that the surface temperatures of the samples C1 to C5 were significantly low, as compared to that of the sample R, among which the surface temperatures of the samples C1 to C4 was particularly low. This indicates that the average perimeter of the island-like regions is preferably 60 $\mu$m or less.

<<Examples D1 to D5>>

Samples D1 to D5 of the secondary battery were fabricated and evaluated in the same manner as the sample A1, except that the agglomerated particle area of the island-like regions was varied as shown in Table 4, by changing as appropriate the content ratio of the polymer material (P) in the positive electrode mixture and the stirring conditions in preparing a positive electrode slurry.

[Table 4]

| sample | additive | PPS content ratio (mass%) | Voronoi variance ($\mu m^4$) | agglomerated particle area ($\mu m^2$) | surface temperature (°O) |
|---|---|---|---|---|---|
| R | - | 0 | - | - | 80 < |
| D1 | PPS | 1.3 | 1.0E+04 | 185 | 68 |
| D2 | PPS | 0.65 | 1.0E+04 | 319 | 69 |
| D3 | PPS | 1.3 | 1.0E+04 | 262 | 69 |
| D4 | PPS | 1.3 | 1.0E+04 | 796 | 73 |
| D5 | PPS | 1.3 | 1.0E+04 | 1300 | 78 |

Table 4 shows that the surface temperatures of the samples D1 to D5 were significantly low, as compared to that of the sample R, among which the surface temperatures of the samples D1 to D4 were particularly low. This indicates that the agglomerated particle area of the island-like regions is preferably 900 $\mu m^2$ or less.

<<Examples E1 to E5>>

Samples E1 to E5 of the secondary battery were fabricated and evaluated in the same manner as the sample A1, except that the content ratio and the average particle diameter (D50) of the polymer material (P) contained in the positive electrode mixture were varied as shown in Table 5.

[Table 5]

| sample | additive | PPS content ratio (mass%) | Voronoi variance ($\mu m^4$) | average particle diameter (D50) ($\mu m$) | surface temperature (°C) |
|---|---|---|---|---|---|
| R | - | 0 | - | - | 80 < |
| E1 | PPS | 1.3 | 1.0E+04 | 10 | 68 |
| E2 | PPS | 1.3 | 1.0E+04 | 25 | 70 |
| E3 | PPS | 0.65 | 1.0E+04 | 25 | 70 |
| E4 | PPS | 1.3 | 1.0E+04 | 45 | 70 |
| E5 | PPS | 1.3 | 1.0E+04 | 60 | 78 |

Table 5 shows that the surface temperatures of the samples E1 to E5 were significantly low, as compared to that of the sample R, among which the surface temperatures of the samples E1 to E4 were particularly low. This indicates that the

average particle diameter (D50) of the polymer material (P) is preferably 50 μm or less.

<<Examples F1 to F5>>

Samples F1 to F5 of the secondary battery were fabricated and evaluated in the same manner as the sample A1, except that the content ratio and the BET specific surface area of the polymer material (P) contained in the positive electrode mixture were varied as shown in Table 6.

[Table 6]

| sample | additive | PPS content ratio (mass%) | Voronoi variance (μm$^4$) | **BET** specific surface area (m$^2$/g) | surface temperature (°O) |
|---|---|---|---|---|---|
| R | - | 0 | - | - | 80 < |
| F1 | PPS | 0.65 | 1.0E+04 | 1.3 | 67 |
| F2 | PPS | 1.3 | 1.0E+04 | 1.8 | 67 |
| F3 | PPS | 0.65 | 1.0E+04 | 5.0 | 70 |
| F4 | PPS | 0.65 | 1.0E+04 | 10.0 | 69 |
| F5 | PPS | 0.65 | 1.0E+04 | 13.0 | 78 |

Table 6 shows that the surface temperatures of the samples F1 to F5 were significantly low, as compared to that of the sample R, among which the surface temperatures of the samples F1 to F4 were particularly low. This indicates that the BET specific surface area of the polymer material (P) is preferably 10 m$^2$/g or less.

<<Examples G1 to G4>>

Samples G1 to G4 of the secondary battery were fabricated and evaluated in the same manner as the sample A1, except that the content ratio and the weight-average molecular weight Mw of the polymer material (P) contained in the positive electrode mixture were varied as shown in Table 7.

[Table 7]

| sample | additive | PPS content ratio (mass%) | Voronoi variance (μm$^4$) | weight-average molecular weight Mw | surface temperature (°O) |
|---|---|---|---|---|---|
| R | - | 0 | - | - | 80 < |
| G1 | PPS | 1.3 | 1.0E+04 | 13,000 | 65 |
| G2 | PPS | 1.3 | 1.0E+04 | 16,000 | 69 |
| G3 | PPS | 1.3 | 1.0E+04 | 28,000 | 69 |
| G4 | PPS | 1.3 | 1.0E+04 | 50,000 | 78 |

Table 7 shows that the surface temperatures of the samples G1 to G4 were significantly low, as compared to that of the sample R, among which the surface temperatures of the samples G1 to G3 were particularly low. This indicates that the weight-average molecular weight Mw of the polymer material (P) is preferably less than 50,000.

<<Samples H1 to H4>>

The content ratio of the polymer material (P) in the positive electrode mixture was varied as shown in Table 8. In samples H3 and H4, the separator was changed to a 13 μm-thick microporous thin film made of polyethylene without a heat-resistant layer. Except the above, in the same manner as in the sample A1, samples H1 to H4 of the secondary battery was fabricated, and evaluated.

[Table 8]

| sample | additive | PPS content ratio (mass%) | Voronoi variance ($\mu m^4$) | heat-resistant layer | surface temperature (°O) |
|---|---|---|---|---|---|
| H1 | PPS | 1.3 | 1.0E+06 | with | 68 |
| H2 | PPS | 0.65 | 1.0E+06 | with | 70 |
| H3 | PPS | 1.3 | 1.0E+06 | without | 76 |
| H4 | PPS | 0.65 | 1.0E+06 | without | 76 |

Table 8 shows that the surface temperatures of the samples H1 and H2 were significantly low, as compared to those of the samples H3 and H4. This indicates that the separator having a heat-resistant layer is preferable.

[Industrial Applicability]

The nonaqueous electrolyte secondary battery according to the present disclosure is useful as a main power source for mobile communication devices, portable electronic devices, electric vehicles, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

10: secondary battery, 11: sealing assembly, 12: valve body, 13: metal plate, 14: insulating member, 15: positive electrode plate, 15a: positive electrode lead, 16: negative electrode plate, 16a: negative electrode lead, 17: separator, 18: electrode group, 21: gasket, 22: battery can, 22a: groove, 23: first insulating plate, 24: second insulating plate

## Claims

1. A nonaqueous electrolyte secondary battery, comprising:

    a positive electrode; a negative electrode; a nonaqueous electrolyte; and a separator interposed between the positive electrode and the negative electrode, wherein
    the negative electrode includes a negative electrode current collector, and a negative electrode active material layer supported on the negative electrode current collector,
    the negative electrode active material layer contains a negative electrode active material, a binder, a thickener, and an additive,
    the additive is a polymer material having a melting point or thermal decomposition temperature of 200 °C or higher and 500 °C or lower,
    in a cross section of the negative electrode active material layer, the polymer material is dispersed, forming a plurality of island-like regions, and
    a variance value of a Voronoi diagram when the cross section of the negative electrode active material layer is subjected to a Voronoi tessellation for the island-like regions is $2\times10^7$ $\mu m^4$ or less.

2. The nonaqueous electrolyte secondary battery according to claim 1, wherein an average perimeter of the island-like regions is 60 $\mu$m or less.

3. The nonaqueous electrolyte secondary battery according to claim 1, wherein an average area of the island-like regions is 200 $\mu m^2$ or less.

4. The nonaqueous electrolyte secondary battery according to claim 1, wherein an average area of the top three largest island-like regions is 900 $\mu m^2$ or less.

5. The nonaqueous electrolyte secondary battery according to claim 1, wherein an average particle diameter of the

polymer material is 50 μm or less.

6. The nonaqueous electrolyte secondary battery according to claim 1, wherein a BET specific surface area of the polymer material is 10 $m^2/g$ or less.

7. The nonaqueous electrolyte secondary battery according to claim 1, wherein a weight-average molecular weight (Mw) of the polymer material satisfies Mw < 50,000.

8. The nonaqueous electrolyte secondary battery according to claim 1, wherein the polymer material has a backbone including a phenylene group and a sulfide group.

9. The nonaqueous electrolyte secondary battery according to claim 8, wherein the backbone includes a repeating structure represented by a formula:

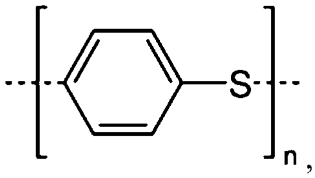

where n is any integer.

10. The nonaqueous electrolyte secondary battery according to claim 9, wherein the polymer material includes polyphenylene sulfide.

11. The nonaqueous electrolyte secondary battery according to claim 1, wherein the polymer material contains chloride ions in an amount of 10 ppm or more and 1000 ppm or less by mass.

12. The nonaqueous electrolyte secondary battery according to claim 1, wherein a content ratio of the polymer material in the negative electrode active material layer is 0.01 mass% or more and 5 mass% or less.

13. The nonaqueous electrolyte secondary battery according to claim 1, wherein the negative electrode active material includes at least one selected from the group consisting of a carbon material and a silicon-containing material.

14. The nonaqueous electrolyte secondary battery according to claim 1, wherein

the separator has a substrate layer, and a heat-resistant layer laminated on the substrate layer, and
the melting point or thermal decomposition temperature of the polymer material is equal to or higher than a melting point of the substrate layer.

15. A negative electrode for a secondary battery, comprising:

a negative electrode current collector; and a negative electrode active material layer supported on the negative electrode current collector, wherein
the negative electrode active material layer contains a negative electrode active material, a binder, and an additive,
the additive is a polymer material having a melting point or thermal decomposition temperature of 200 °C or higher and 500 °C or lower,
in a cross section of the negative electrode active material layer, the polymer material is dispersed, forming a plurality of island-like regions, and
a variance value of a Voronoi diagram when the cross section of the negative electrode active material layer is subjected to a Voronoi tessellation for the island-like regions is $2 \times 10^7$ $\mu m^4$ or less.

FIG. 1

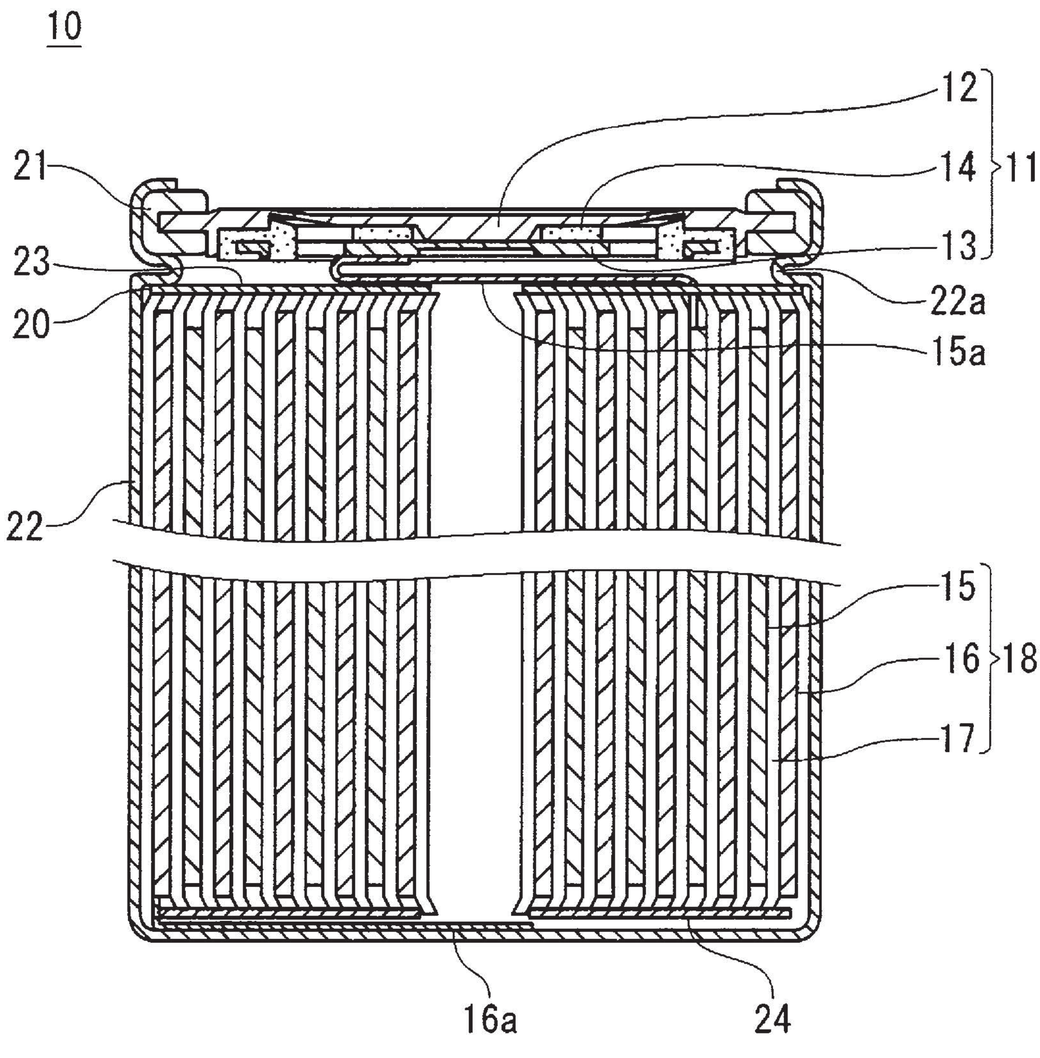

**INTERNATIONAL SEARCH REPORT**

International application No. **PCT/JP2024/033540**

**A. CLASSIFICATION OF SUBJECT MATTER**

***H01M 4/13***(2010.01)i; ***H01M 4/38***(2006.01)i; ***H01M 4/48***(2010.01)i; ***H01M 4/62***(2006.01)i; ***H01M 4/587***(2010.01)i; ***H01M 10/052***(2010.01)i; ***H01M 50/449***(2021.01)i; ***H01M 50/489***(2021.01)i
FI: H01M4/13; H01M4/38 Z; H01M4/48; H01M4/587; H01M4/62 Z; H01M10/052; H01M50/449; H01M50/489

According to International Patent Classification (IPC) or to both national classification and IPC

**B. FIELDS SEARCHED**

Minimum documentation searched (classification system followed by classification symbols)

H01M4/13; H01M4/38; H01M4/48; H01M4/62; H01M4/587; H01M10/052; H01M50/449; H01M50/489

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>A | KR 10-2017-0094720 A (LG CHEM, LTD.) 21 August 2017 (2017-08-21)<br>claims, paragraphs [0023]-[0036], [0047], [0068] | 1-7, 11-15<br><br>8-10 |
| A | JP 2013-73680 A (TOYOTA JIDOSHA KABUSHIKI KAISHA) 22 April 2013 (2013-04-22) | 1-15 |
| A | JP 2019-164993 A (RICOH COMPANY, LTD.) 26 September 2019 (2019-09-26) | 1-15 |
| P, A | WO 2024/143010 A1 (PANASONIC INTELLECTUAL PROPERTY MANAGEMENT CO., LTD.) 04 July 2024 (2024-07-04) | 1-15 |

☐ Further documents are listed in the continuation of Box C.

☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 October 2024** | **05 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (July 2022)

**INTERNATIONAL SEARCH REPORT**
**Information on patent family members**

International application No.
**PCT/JP2024/033540**

| Patent document cited in search report | Publication date (day/month/year) | Patent family member(s) | Publication date (day/month/year) |
|---|---|---|---|
| KR 10-2017-0094720 A | 21 August 2017 | (Family: none) | |
| JP 2013-73680 A | 22 April 2013 | (Family: none) | |
| JP 2019-164993 A | 26 September 2019 | US 2021/0005876 A1<br>WO 2019/176965 A1<br>KR 10-2020-0117014 A<br>CN 111819709 A | |
| WO 2024/143010 A1 | 04 July 2024 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023153675 A
- JP 2003007303 A
- JP 2019506715 A